(19) Europäisches Patentamt / European Patent Office / Office européen des brevets

(11) **EP 2 458 477 B1**

(12) **EUROPEAN PATENT SPECIFICATION**

(45) Date of publication and mention
of the grant of the patent:
**22.07.2015 Bulletin 2015/30**

(51) Int Cl.:
***G06F 3/033*** (2013.01)

(21) Application number: **09847601.3**

(22) Date of filing: **31.07.2009**

(86) International application number:
**PCT/KR2009/004315**

(87) International publication number:
**WO 2011/010762 (27.01.2011 Gazette 2011/04)**

(54) **SIGNAL GENERATION DEVICE**

SIGNALERZEUGUNGSVORRICHTUNG

DISPOSITIF DE GÉNÉRATION DE SIGNAUX

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **21.07.2009 KR 20090066328**

(43) Date of publication of application:
**30.05.2012 Bulletin 2012/22**

(73) Proprietor: **Pnf Co., Ltd
Seoul 135-539 (KR)**

(72) Inventor: **LEE, Jae Jun
Seoul 151-891 (KR)**

(74) Representative: **ABG Patentes, S.L.
Avenida de Burgos, 16D
Edificio Euromor
28036 Madrid (ES)**

(56) References cited:
**WO-A1-00/28348          WO-A1-2008/108769
KR-A- 20050 047 315     KR-A- 20080 071 384
KR-A- 20090 025 097**

## Description

[Technical Field]

The present invention relates to a signal generation device, and more particularly, to a signal generation device for generating a reference signal and an ultrasonic signal capable of allowing digital information to be input.

[Background Art]

As electronic apparatuses such as computers and PDAs have been widely used, users have written notes, contacts, or the like on these electronic apparatuses instead of pocket diaries.

Particularly, as portable electronic apparatuses such as tablet PCs and PDAs have been widely spread, users have performed direct handwriting inputting and storing with respect to the portable electronic apparatuses such as tablet PCs and PDAs by using pens or the like instead of keyboards. In addition, a user can perform handwriting and picture editing by using various applications such as Paint.

As a handwriting input method without use of a touch screen or a tablet PC, there is disclosed an input method and apparatus where a signal generation device for generating a reference signal such as an infrared ray signal or an RF signal and an ultrasonic signal is embodied by an input pen, a wireless mouse, or the like through a user inputs characters or the like, the absolute position of the signal generation device is measured by using a time difference between the reference signal and the ultrasonic signal, and position information of the signal generation device is input, so that the handwriting of the user can be input by connecting coordinates of movement of the signal generation device.

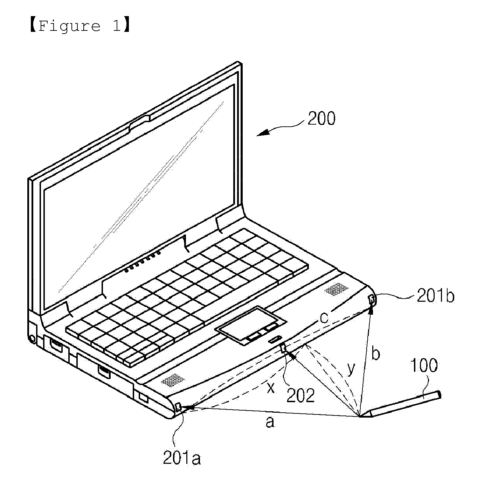

Fig. 1 is a diagram illustrating a conventional position information input method using an ultrasonic signal. Referring to Fig. 1, the input system using an ultrasonic signal includes a signal generation device 100 and an input apparatus 200.

The signal generation device 100 generates and emits a reference signal and an ultrasonic signal in the air at a predetermined time period. At this time, the reference signal is a signal propagating at the speed of light such as an infrared ray signal or an RF signal. The reference signal maybe generated at the same time of generation of the ultrasonic signal or with a predetermined time difference with respect to the generation of the ultrasonic signal.

The input apparatus 200 includes a reference signal reception sensor 202 which receives the reference signal and a plurality of ultrasonic signal reception sensors 201a and 201b each of which receives the ultrasonic signal. At this time, the ultrasonic signal reception sensors 201a and 201b are disposed to be separated from each other by a predetermined distance.

The (x, y) coordinate which is a position of the signal generation device 100 can be obtained by solving the following Equation 1 with respect to x and y.

$$【Equation\ 1】$$

$$a^2 = x^2 + y^2$$
$$b^2 = (c-x)^2 + y^2$$

In Equation 1, since an infrared ray signal or an RF frequency signal which is the reference signal propagates at the speed of light, it is considered that the reference signal is received by the reference signal reception sensor 202 at the same time of generation of the reference signal in the signal generation device 100. Therefore, the distances a and b can be obtained by multiplying the speed of sound with a difference between a reception time of the reference signal and a reception time of the ultrasonic signal in the left-side ultrasonic sensor and by multiplying the speed of sound with a difference between a reception time of the reference signal and a reception time of the ultrasonic signal in the right-side ultrasonic sensor. Since the distance c is a predetermined value, the (x, y) coordinate can be obtained by applying the values a, b, and c to Equation 1.

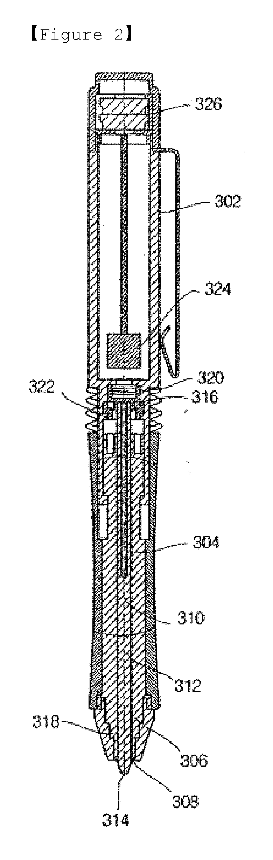

On the other hand, a configuration of a conventional signal generation device is illustrated in Fig. 2.

The conventional signal generation device 300 illustrated in Fig. 2 includes a housing 302. The housing 302 includes a cylindrical barrel 304 which is extended to a distal end portion 306 and a central orifice 308 connected to the barrel 304 is formed in the distal end portion.

The housing 302 receives and protrudes a portion of the body 310 of a detachable pen core 312 through the orifice 308, and a pen tip 314 of the pen core 312 is protruded through the central orifice 308. Therefore, the pen core 312 can be mounted or replaced at the front side.

In addition, the conventional signal generation device 300 includes a retainer 316. The retainer 316 is engaged with the housing 302 to detachably retain the detachable pen core 312 in the housing 302.

In the signal generation device in the related art, the pen core 312 is prevented from being fallen down due to a retainer which is disposed in the signal generation device. However, since the retainer 316 is constructed with an elastic spring or the like, the elasticity of the retainer may be weakened due to long term use, so that the pen core 312 may not be stably held.

[Disclosure]

[Technical Problem]

The present invention provides a signal generation device according to the appended claims

[Description of Drawings]

Fig. 1 is a diagram illustrating a conventional position information input method using an ultrasonic signal.

Fig. 2 is a diagram illustrating a configuration of a conventional signal generation device.

Fig. 3 is a cross-sectional diagram illustrating a structure of a signal generation device according to a first embodiment of the present invention.

Fig. 4 is a diagram for explaining a method of replacing a pen core portion of the signal generation device according to the first embodiment of the present invention.

Fig. 5 is a diagram illustrating a structure of a signal generation device according to a modified example of the first embodiment of the present invention.

Fig. 6 is a diagram illustrating a structure of a signal generation device according to a modified example of the first embodiment of the present invention.

Fig. 7 is a diagram illustrating a structure of a signal generation device according to a second embodiment of the present invention.

Fig. 8 is a diagram for explaining a method of replacing a pen core portion of the signal generation device according to the second embodiment of the present invention.

Fig. 9 is a diagram illustrating a structure of a signal generation device according to a modified example of the second embodiment of the present invention.

[Best Mode]

Hereinafter, exemplary embodiments of the present invention will be described with reference to the accompanying drawings.

Hereinafter, in embodiments of the present invention, an example of a pen-shaped signal generation device will be described. If a user moves the pen-shaped signal generation device, the signal generation device generates a reference signal and an ultrasonic signal, and an information input apparatus corresponding to the signal generation device receives the reference signal and the ultrasonic signal to track a position of the signal generation device, so that position information can be input. Since this information input method is similar to the conventional technique described above, the detailed description is omitted.

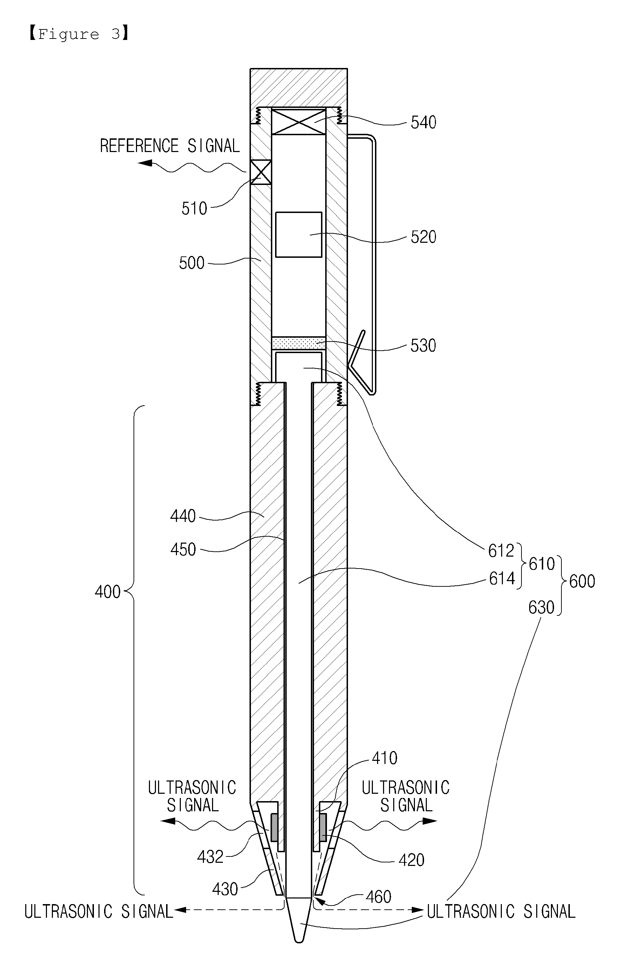

Fig. 3 is a cross-sectional diagram illustrating a structure of a signal generation device according to the first embodiment of the present invention. Referring to Fig. 3, the signal generation device according to the present invention includes an upper housing 500, a lower housing 400 which is engaged with the upper housing 500, and a pen core portion 600 of which the upper portion is contained in the upper housing 500 and of which the lower portion is contained in the lower housing 400.

The user inputs position information or handwriting information by moving the signal generation device in the state where a pen tip 630 which is the distal end of the pen core portion 600 is in contact with a paper surface (handwriting surface). An inner portion of the pen core portion 600 may be filled with ink for performing actual handwriting.

First, the lower housing 400 includes a barrel 440 which is engaged with the upper housing 500 by screw engagement or inserting engagement, a penetration portion 450 which is formed in the barrel 440, an ultrasonic emitter installation portion 410 which is formed to be connected to the barrel 440 and where an ultrasonic emitter 420 is disposed therein, and a cap member 430 which is formed to surround the installation portion 410 and to be connected to the barrel 440.

The penetration portion 450 is formed to penetrate the lower housing 400 from the upper portion to the lower portion thereof so that the pen core portion 600 can be inserted therein and apentip 630 of the pen core portion 600 can be protruded downwards so as to be abutted on the handwriting surface. The penetration portion 450 may be formed to have a cylindrical shape of which the cross section is a circle. If the penetration portion 450 has such a structure that the pen core portion 600 can be in close contact with the inner surface of the penetration portion 450 in the penetration portion 450, the cross section of the penetration portion 450 maybe formed to be a rectangle, a pentagon, a triangle, or the like besides a circle.

The ultrasonic emitter installation portion 410 is formed to be protruded from the barrel 440 at the distal end portion of the lower housing 400 directing toward the handwriting surface. The ultrasonic emitter 420 is disposed so as to surround the ultrasonic emitter installation portion 410.

The cap member 430 is formed to be integrated with the barrel 440 or can be engaged with the barrel 440 by screw engagement, inserting engagement, or the like so that the cap member 430 is connected to the barrel 440. In addition, the cap member 430 is formed to surround the ultrasonic emitter installation portion 410 and the ultrasonic emitter 420 so that the cap member 430 contains the ultrasonic emitter installation portion 410 and the ultrasonic emitter 420 therein. In the cap member 430, a pen tip hole 460 is formed so that the pen tip 630 can be protruded outwards. The pen tip 630 penetrates the pen tip hole 460 to be protruded outwards. At this time, the ultrasonic signal generated by the ultrasonic emitter 420 emits in the direction toward the handwriting surface through a space between the pen tip 630 and the pen tip hole 460.

In addition, an ultrasonic signal emission opening 432 may be further formed on an outer circumferential surface of the cap member 430 so that the ultrasonic signal generated by the ultrasonic emitter 420 directly emits outwards without directly passing through the pen tip hole 460.

On the other hand, the pen core portion 600 includes a pen tip 630 and a body portion 610.

The pen tip 630 is protruded outwards from the cap member 430. When a user performs handwriting on the handwriting surface (or paper surface), the pen tip 630 is abutted on the handwriting surface (or paper surface). In addition, in the case where the body portion 610 is filled with ink, similarly to a general pen such as a ball point pen, the pen tip 630 discharges a predetermined amount of ink, so that actual handwriting can be performed.

The body portion 610 includes an upper portion 612 (having the same meaning as an "upper body portion") and a lower portion 614 (having the same meaning as a "lower body portion "). The upper body portion 612 is formed to have a cross-sectional area (diameter) larger than that of the penetration portion 450 of the lower housing 400, and the lower body portion 614 is formed to have a cross-sectional area (diameter) is smaller than that of the penetration portion 450 of the lower housing 400.

After the upper body portion 612 and the lower body portion 614 are separately configured, the body portion 610 may be configured by engaging the upper body portion 612 and the lower body portion 614 so that f the upper body portion 612 and the lower body portion 614 cannot be separated by a user. Alternatively, the upper body portion 612 and the lower body portion 614 may be formed as one component (for example, an extracted plastic product or an extracted metal product) made of one material.

Due to this structural characteristics, the lower portion 614 of the body portion is inserted into the penetration portion 450 of the lower housing 400 to penetrate the penetration portion 450 and to be protruded outwards from the ultrasonic emitter installation portion 410 and the cap member 430, and the upper body portion 612 is suspended from the barrel 440 of the lower housing 400 to be contained in the upper housing 500. Therefore, although the user raises the signal generation device to be separated from the handwriting surface (paper surface) during the handwriting, the pen core portion 600 cannot be fallen downwards through the penetration portion 450.

In addition, an inner portion of the body portion 610 may be filled with ink, so that the ink can be supplied to the pen tip 630.

On the other hand, the power supply unit 540, the pressure sensing unit 530, the reference signal generation unit 510, and the controller 520 are disposed in the upper housing 500, and these components are connected to each other through wires.

The power supply unit 540 is constructed with a primary battery, a secondary battery, or the like to supply power to the ultrasonic emitter 420, the pressure sensing unit 530, the reference signal generation unit 510, and the controller 520. The power supply unit 540 maybe disposed at an arbitrary position of the upper housing 500.

The pressure sensing unit 530 is disposed to be adjacent to the upper body portion 612 of the pen core portion 600. If the user allows the pen tip 630 to be in contact with the handwriting surface (paper surface), handwriting pressure applied to the pen tip 630 is transmitted to the upper body portion 612. The upper body portion 612 becomes in contact with the pressure sensing unit 530, and the pressure sensing unit 530 determines whether or not the pen tip 630 is in contact with the handwriting surface (paper surface) and measures the handwriting pressure applied to the pen tip 630 to output the information to the controller 520. The pressure sensing unit 530 may be embodied by a contact type or pressure-sensitive type micro switch, or the like.

The reference signal generation unit 510 generates a reference signal such as an RF signal or an infrared signal according to a control signal input from the controller 520 and emits the reference signal outwards.

The controller 520 generates control signals for instructing a reference signal and an ultrasonic signal to be generated simultaneously or with a predetermined time difference and outputs the control signal to the reference signal generation unit 510 and the ultrasonic emitter 420.

In addition, if the handwriting pressure is sensed by the pressure sensing unit 530, the controller 520 generates handwriting pressure information and transmits the handwriting pressure information together with the reference signal.

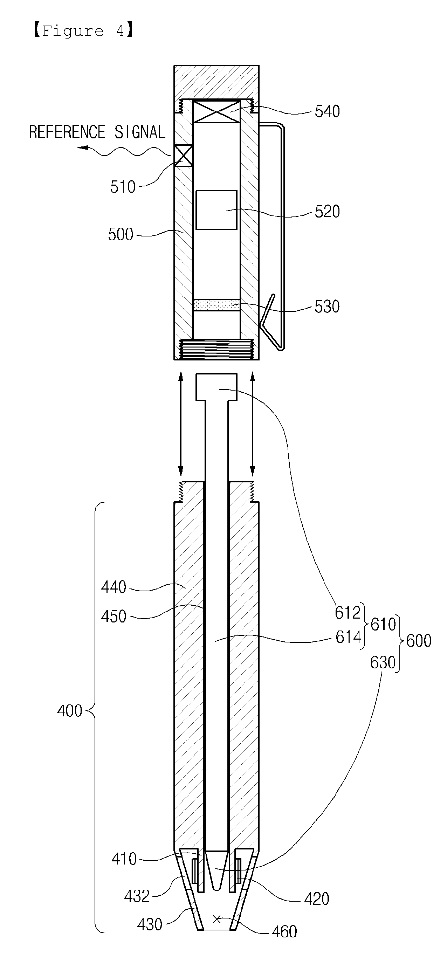

Fig. 4 is a diagram for explaining a method of replacing the pen core portion of the signal generation device 600 according to the first embodiment. Referring to Fig. 4, in the case where the pen core portion 600 filled with ink is to be replaced, the user separates the upper housing 500 and the lower housing 400 which are engaged with each other by inserting engagement or screw engagement. Next, the user raises the upper body portion 612 of the pen core portion 600 to remove the existing pen core portion 600 and inserts the lower body portion 614 of a new pen core portion 600 into the penetration portion 450. Next, the user engages the upper housing 500 and the lower housing 400, so that the pen core portion 600 can be replaced.

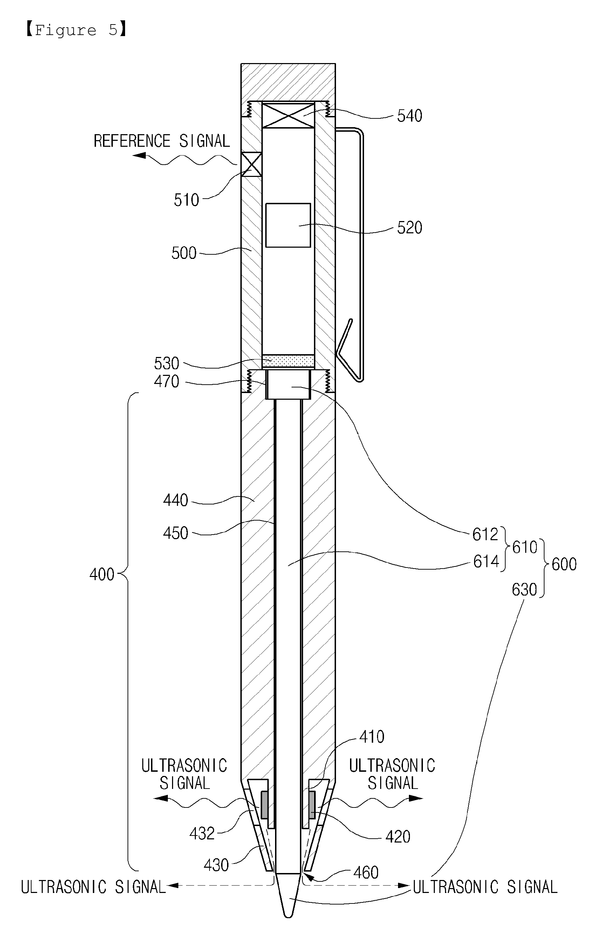

Fig. 5 is a diagram illustrating a modified example of the first embodiment of the present invention. In the example illustrated in Fig. 5, besides the configuration of the example illustrated in Figs. 3 and 4, a containing hole 470 which can contain the upper body portion 612 and a penetration portion 450 which is connected to the containing hole 470 and the lower body portion 614 penetrates are formed in the lower housing 400. In addition, the pressure sensing unit 530 is disposed at a position in the upper housing 500 where the pressure sensing unit 530 can be in close contact with the upper body portion 614. Since the other configurations are the same as those of the first embodiment described above, the detailed description is omitted.

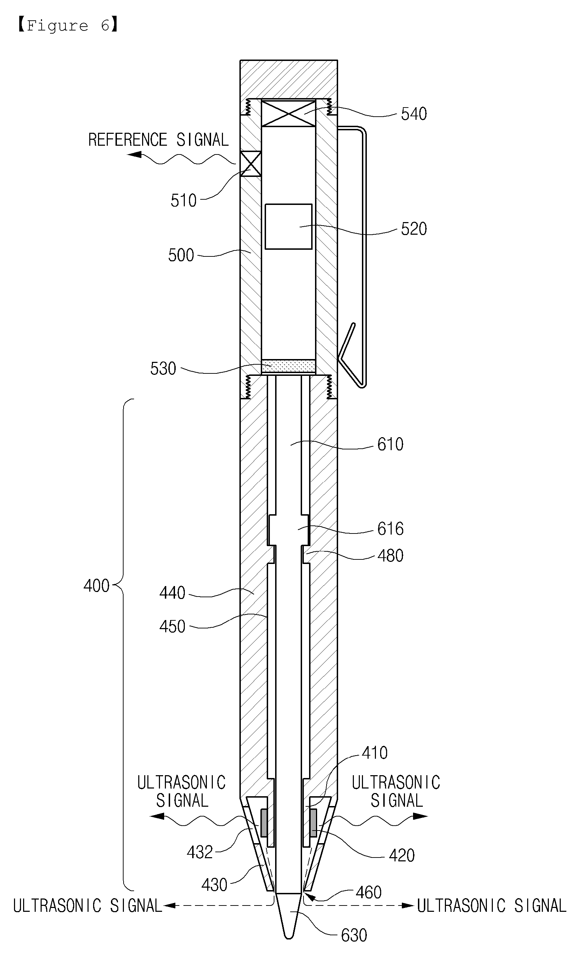

Fig. 6 is a diagram illustrating another modified example of the first embodiment of the present invention. In the example illustrated in Fig. 6, the pen core portion 600 includes a body portion 610 and a pen tip portion 630. A body-side stopper 616 is formed at a predetermined position of the body portion 610. The body-side stopper 616 may be formed to be integrated with the body portion 610 as a single extracted product. Alternatively, a body-side stopper 616 is separately produced to have a ring shape, and after that, the body-side stopper 616 may be engaged with the body portion 610 so that the body-side stopper 616 cannot be separated by a user.

On the other hand, a barrel-side stopper 480 is formed in the barrel 440. If the pen core portion 610 is inserted into the barrel 440, the barrel-side stopper 480 is engaged with the body-side stopper 616, so that the pen core portion 610 is prevented from being fallen downwards. In the first embodiment described above, it should be noted that the upper body portion 612 has a function as the body-side stopper 616, and the portion of the barrel 440 which is engaged with the upper body portion 612 to prevent the pen core portion 610 frombeing fallen downwards has a function as the barrel-side stopper 480. Since the other configurations are the same as those of the first embodiment described above, the detailed description is omitted.

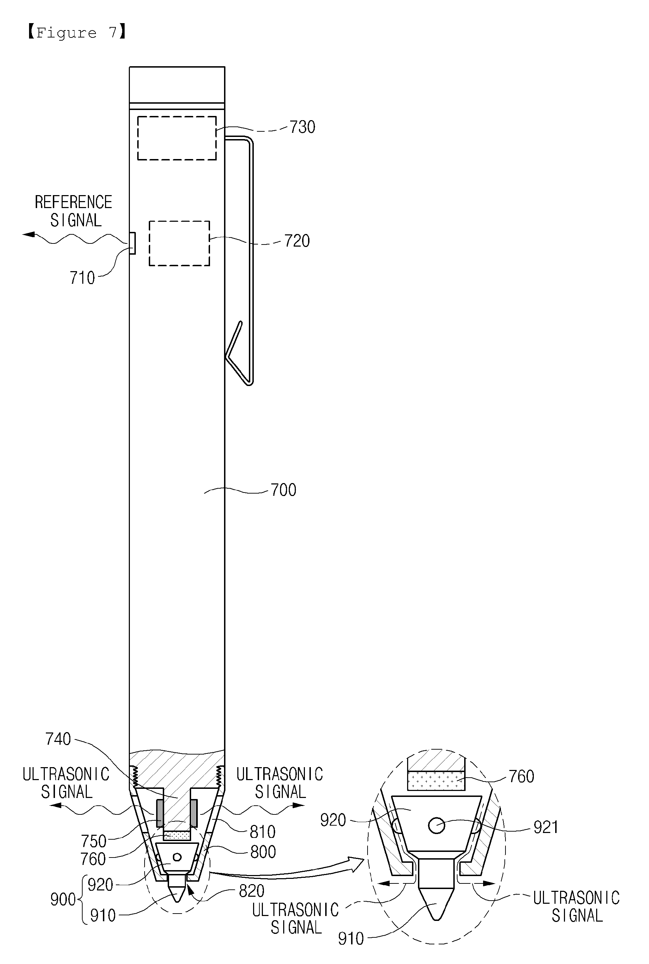

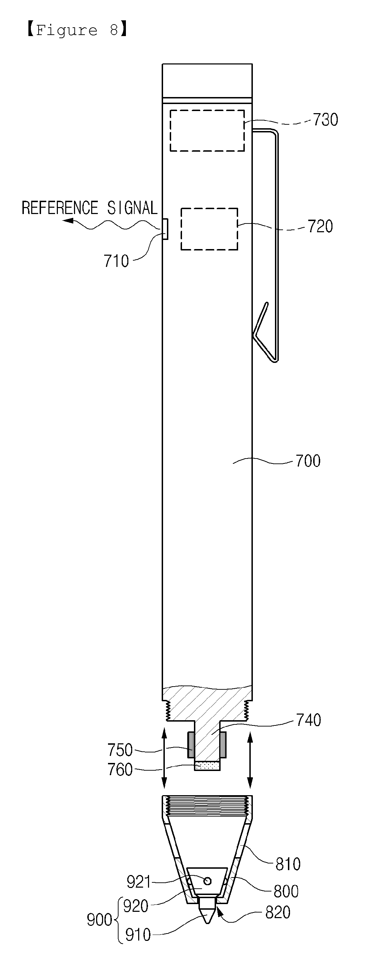

Hereinafter, the configurations of the signal generation devices according to the modified examples of the first and second embodiments of the present invention are described. Hereinafter, the signal generation device according to the second embodiment of the present invention will be described with reference to Figs. 7 and 8.

Referring to Fig. 7, the signal generation device according to the second embodiment of the present invention is configured as a pen type and includes a housing 700, a pen core portion 900 and a cap member 800.

First, similarly to the first embodiment, the housing 700 contains apower supplyunit 730, acontroller720, and a reference signal generation unit 710, and an ultrasonic emitter installation portion 740 where the ultrasonic emitter 750 is to be installed therein is formed at the distal end of the housing 700, which is directed toward the handwriting surface (paper surface), to be protruded from the housing 700, and the ultrasonic emitter 750 is disposed to surround the ultrasonic emitter installation portion 740.

In addition, the pressure sensing unit 760 is disposed at an arbitrary position where the pressure sensing unit 760 can be in contact with the pen core portion 900. Figs. 7 and 8 illustrate examples where the pressure sensing unit 760 is disposed at the distal end of the ultrasonic emitter installation portion 740. The pressure sensing unit 760 may be disposed at any position, if the pressure sensing unit 760 is in close contact with the pen core portion 900 and capable of measuring a pressure applied to the pen core portion 900 at the position.

In the case where the user performs handwriting by allowing the signal generation device to be in contact with the handwriting surface (paper surface), the pressure sensing unit 760 becomes in contact with the pen core portion 900 to determine whether or not the pen tip 910 is in contact with the handwriting surface and to measure the handwriting pressure and outputs the information to the controller 720. The pressure sensing unit 760 may be embodied by a contact type or pressure-sensitive type micro switch, or the like.

The power supply unit 730 is constructed with a primary battery, a secondary battery, or the like to supply power to the ultrasonic emitter 750, the pressure sensing unit 760, the reference signal generation unit 710, and the controller 720. The power supply unit 730 may be disposed at an arbitrary position of the housing 700.

The reference signal generation unit 710 generates a reference signal such as an RF signal or an infrared ray signal and emits the reference signal outwards according to a control signal input from the controller 720. The reference signal generation unit 710 may be disposed at an arbitrary position of the housing 700.

The controller 720 generates control signals for instructing a reference signal and an ultrasonic signal to be generated simultaneously or with a predetermined time difference and outputs the control signal to the reference signal generation unit 710 and the ultrasonic emitter 750. In addition, if the handwriting pressure is sensed by the pressure sensing unit 760, the controller 720 generates handwriting pressure information and transmits the handwriting pressure information together with the reference signal. The power supply unit 730, the controller 720, the pressure sensing unit 760, the reference signal generation unit 710, and the ultrasonic emitter 750 are connected to each other through wires.

On the other hand, the cap member 800 is engaged with the housing 700 by inserting engagement or screw engagement so that the ultrasonic emitter 750 and the pen core portion 900 are contained therein. Apen tip hole 820 is formed in the cap member so that the pen tip 910 of the pen core portion 900 can be protruded in the direction toward the handwriting surface. The ultrasonic signal generated from the ultrasonic emitter 750 emits through a space between the pen tip 910 and the pen tip hole 820.

In this case, if the outer circumferential surface of the body portion 920 is in close contact with the inner circumferential surface of the cap member 800, it is difficult for the ultrasonic signal to emit outwards through the space between the outer circumferential surface of the body portion 920 and the inner circumferential surface of the cap member 800. Therefore, in order to prevent the outer circumferential surface of the body portion 920 from being in close contact with the inner circumferential surface of the cap member 800 so as to allow the ultrasonic signal to easily emit, a protrusion or a structure for forming a space through which a sound wave can pass may be formed on the outer circumferential surface of the body portion 920 or the inner circumferential surface of the cap member 800. In the example illustrated, a protrusion 921 is formed on the outer circumferential surface of the body portion 920 so that the protrusion 921 and the inner circumferential surface of the cap member 800 are in contact with each other. Accordingly, it is possible to prevent the outer circumferential surface of the body portion 920 from being in close contact with the inner circumferential surface of the cap member 800.

In the cap member, an emission opening 810 may be formed in the vicinity of the cap member 800 so that the ultrasonic signal generated from the ultrasonic emitter 750 directly emits outwards without passing through the pen tip and the pen tip hole.

On the other hand, the pen core portion 900 includes the pen tip 910 and the body portion 920, and the body portion 920 is formed to have a cross-sectional area (diameter) larger than that of the pen tip hole 820 so as to be contained in the cap member 800, and the pen tip 910 is formed to have a cross-sectional area (diameter) smaller than that of the pen tip 910 so as to be protruded outwards through the pen tip hole 820. Similarly to the first embodiment, an inner portion of the pen core portion 900 may be filled with ink, so that the ink can be discharged from the pen tip 910. In this case, the user can input information while directly performing handwriting on the handwriting surface.

Fig. 8 is a diagram for explaining a process of replacing the pen core portion 900 according to the second embodiment of the present invention. Referring to Fig. 6, the user separates the cap member 800 which is engaged with the housing 700 by screw engagement or inserting engagement from the housing 700, and after that, the user may replace the pen core portion 900 contained in the cap member 800.

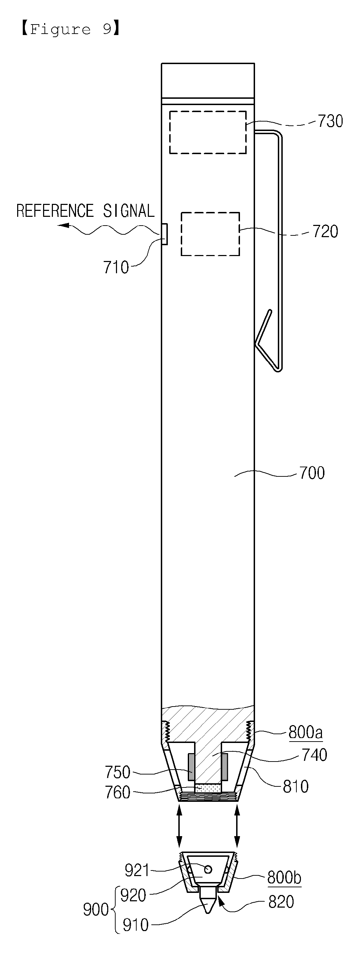

Fig. 9 is a diagram illustrating a structure of a signal generation device according to a modified example of the second embodiment of the present invention.

Referring to Fig. 9, the configuration of the modified example of the second embodiment is the same as that of the second embodiment illustrated in Figs. 7 and 8 except that the cap member 800 can be divided into an upper cap member 800a and a lower cap member 800b.

More specifically, an upper cap member 800a and a lower cap member 800b can be engaged with and separated from each other by inserting engagement or screw engagement, and the upper cap member 800a can be engaged with each other the housing 700 by inserting engagement or screw engagement.

an ultrasonic emitter 750 and the pressure sensing unit 760 are contained in the upper cap member 800a, and an emission opening 810 may be formed in the vicinity of the upper cap member 800a so that the ultrasonic signal generated from the ultrasonic emitter 750 directly emits outwards.

On the other hand, the lower cap member 800b contains the pen core portion 900 therein, and a pen tip hole 820 is formed so that the pen tip 910 is protruded in the direction toward the handwriting surface. In addition, similarly to the second embodiment, a protrusion 912 or a structure forming a space through which a sound wave can pass may be formed on the outer circumferential surface of the body portion 920 or the inner circumferential surface of the lower cap member 800b so that the ultrasonic signal can easily emit through the pen tip hole 820.

The upper cap member 800a is firmly engaged with the housing 700 so that the ultrasonic emitter 750 and the pressure sensing unit 760 can be protected from the user. The user can separate the lower cap member 800b from the upper cap member 800a to replace the pen core portion 900.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

**Claims**

1. A signal generation device comprising:

    a housing (700) where an ultrasonic emitter installation portion (740) is formed to be protruded so that an ultrasonic emitter (750) can be disposed therein;
    a cap member (800) which is engaged with the housing (700) so that the ultrasonic emitter installation portion (740) and the ultrasonic emitter (750) disposed to surround the ultrasonic emitter installation portion (740) are contained therein; and
    a pen core portion (900) which includes a pen tip (910) and a body portion (920), wherein the body portion (920) is contained in the cap member (800) and the pen tip (910) penetrates a pen tip hole (820) formed in the cap member (800) to be protruded outwards from the cap member (800),
    wherein a cross-sectional area of the body portion (920) is larger than a cross-sectional area of the pen tip hole (820), and a cross-sectional area of the pen tip (910) is smaller than the cross-sectional area of the pen tip hole (820),
    and wherein the cap member (800) includes an upper cap member (800a) which is engaged with the housing (700) to contain the ultrasonic emitter (750) and a lower cap member (800b) which is engaged with the upper cap member (800a) to contain the pen core portion (900).

2. The signal generation device according to claim 1, wherein the cap member (800) includes an emission opening (810) through which an ultrasonic signal generated by the ultrasonic emitter is emitted outwards from the cap member (800).

3. The signal generation device according to claim 1, wherein an inner portion of the pen core portion (900) is filed with ink, and the ink is discharged from the pen tip (910).

4. The signal generation device according to claim 1, wherein a protrusion or a structure for forming a space is formed on an outer circumferential surface of the body portion (920) or an inner circumferential surface of the cap member (800) so that the inner circumferential surface of the cap member (800) and the outer circumferential surface of the body portion (920) are prevented from being in close contact with each other.

5. The signal generation device according to claim 1, wherein the housing (700) includes a pressure sensing unit (760) which is disposed at a position adjacent to an upper portion of the body portion (920) and which becomes in close contact with the upper portion of the body portion (920) if a user performs handwriting while allowing the pen tip (910) to be in contact with a handwriting surface to determine based on a pressure applied by the pen tip (910) whether or not the pen tip (910) is in contact with the handwriting surface and to measure a handwriting pressure.

6. The signal generation device according to claim 5, wherein the pressure sensing unit (760) is disposed at a distal end of the ultrasonic emitter (750) installation portion.

7. The signal generation device according to claim 5, wherein the housing (700) further includes:

a reference signal generation unit (710) which generates a reference signal; and
a controller (720) which outputs control signals for instructing generation of the reference signal and the ultrasonic signal to the reference signal generation unit (710) and the ultrasonic emitter (750).

8. The signal generation device according to claim 7, wherein the controller (720) transmits pressure information input from the pressure sensing unit (760) together with the reference signal.

**Patentansprüche**

1. Signalerzeugungsvorrichtung, welche umfasst:

ein Gehäuse (700), wobei ein Ultraschallemitter-Einbauabschnitt (740) vorspringend ausgebildet ist, so dass darin ein Ultraschallemitter (750) angeordnet werden kann;
ein Kappenelement (800), das mit dem Gehäuse (700) in Eingriff steht, so dass der Ultraschallemitter-Einbauabschnitt (740) und der Ultraschallemitter (750), der so angeordnet ist, dass er den Ultraschallemitter-Einbauabschnitt (740) umgibt, darin enthalten sind; und
einen Stiftkernabschnitt (900), der eine Stiftspitze (910) und einen Körperabschnitt (920) umfasst, wobei der Körperabschnitt (920) in dem Kappenelement (800) aufgenommen ist und die Stiftspitze (910) ein in dem Kappenelement (800) ausgebildetes Stiftspitzenloch (820) so durchsetzt, dass sie von dem Kappenelement (800) nach außen vorspringt,
wobei eine Querschnittfläche des Körperabschnitts (920) größer als eine Querschnittfläche des Stiftspitzenlochs (820) ist und eine Querschnittfläche der Stiftspitze (910) kleiner als die Querschnittfläche des Stiftspitzenlochs (820) ist und wobei das Kappenelement (800) ein oberes Kappenelement (800a), das mit dem Gehäuse (700) in Eingriff steht, um den Ultraschallemitter (750) aufzunehmen, und ein unteres Kappenelement (800b), das mit dem oberen Kappenelement (800a) in Eingriff steht, um den Stiftkernabschnitt (900) aufzunehmen, umfasst.

2. Signalerzeugungsvorrichtung nach Anspruch 1, wobei das Kappenelement (800) eine Emissionsöffnung (810) umfasst, durch welche ein von dem Ultraschallemitter erzeugtes Ultraschallsignal von dem Kappenelement (800) nach außen emittiert wird.

3. Signalerzeugungsvorrichtung nach Anspruch 1, wobei ein innerer Abschnitt des Stiftkernabschnitts (900) mit Tinte gefüllt ist und die Tinte von der Stiftspitze (910) abgegeben wird.

4. Signalerzeugungsvorrichtung nach Anspruch 1, wobei ein Vorsprung oder eine Struktur zum Bilden eines Raums auf einer Außenumfangsfläche des Körperabschnitts (920) oder einer Innenumfangsfläche des Kappenelements (800) ausgebildet ist, so dass verhindert wird, dass die Innenumfangsfläche des Kappenelements (800) und die Außenumfangsfläche des Körperabschnitts (920) in engem Kontakt zueinander stehen.

5. Signalerzeugungsvorrichtung nach Anspruch 1, wobei das Gehäuse (700) eine Druckerfassungseinrichtung (760) umfasst, die an einer Position benachbart zu einem oberen Abschnitt des Körperabschnitts (920) angeordnet ist und die in engen Kontakt mit dem oberen Abschnitt des Körperabschnitts (920) kommt, wenn ein Nutzer von Hand schreibt, während ein Kontakt der Stiftspitze (910) mit einer Handschreibfläche zugelassen wird, um beruhend auf einem von der Stiftspitze (910) ausgeübten Druck zu ermitteln, ob die Stiftspitze (910) mit der Handschreibfläche in Kontakt steht oder nicht, und um den Handschreibdruck zu messen.

6. Signalerzeugungsvorrichtung nach Anspruch 5, wobei die Druckerfassungseinrichtung (760) an einem distalen Ende des Einbauabschnitts des Ultraschallemitter (750) angeordnet ist.

7. Signalerzeugungsvorrichtung nach Anspruch 5, wobei das Gehäuse (700) weiterhin umfasst:

eine Referenzsignalerzeugungseinrichtung (710), die ein Referenzsignal erzeugt; und ein Steuergerät (720), das Steuersignale zum Anweisen der Erzeugung des Referenzsignals und des Ultraschallsignals zu der Referenzsignalerzeugungseinrichtung (710) und dem Ultraschallemitter (750) ausgibt.

8. Signalerzeugungsvorrichtung nach Anspruch 7, wobei das Steuergerät (720) von der Druckerfassungseinrichtung (760) eingegebene Druckinformationen zusammen mit dem Referenzsignal übermittelt.

## Revendications

1. Dispositif de génération de signal comprenant :

- un logement (700) où une partie (740) d'une installation de l'émetteur ultrasonique est formée de manière à s'étendre afin qu'un émetteur ultrasonique (750) puisse y être placé à l'intérieur,
- un élément de bouchon (800) qui est engagé avec le logement (700) de manière à ce que la partie (740) d'installation de l'émetteur ultrasonique et l'émetteur ultrasonique (750) placé de manière à entourer la partie (740) de l'installation d'émetteur ultrasonique soient contenus à l'intérieur, et
- une partie de noyau de traceur (900) qui inclut une pointe de traceur (910) et une partie de corps (920), où la partie de corps (920) est contenue dans l'élément de bouchon (800) et la pointe du traceur (910) pénètre un trou pour la pointe du traceur (820) formé dans l'élément de bouchon (800) devant dépasser de l'élément de bouchon (800) vers l'extérieur,

dans lequel une surface de la section transversale de la partie de corps (920) est plus grande que la surface de la section transversale du trou pour la pointe du traceur (820), et une surface de la section transversale de la pointe du traceur (910) est plus petite que la surface de la section transversale du trou de la pointe du traceur (820), et dans lequel l'élément de bouchon (800) inclut un élément de bouchon supérieur (800a) qui est engagé dans le logement (700) pour contenir l'émetteur ultrasonique (750) et un élément de bouchon inférieur (800b) qui est engagé dans l'élément de bouchon supérieur (800a) pour contenir la partie centrale du traceur (900).

2. Dispositif de génération de signal selon la revendication 1, dans lequel l'élément de bouchon (800) inclut une ouverture d'émission (810) à travers laquelle un signal ultrasonique généré par l'émetteur ultrasonique est émis vers l'extérieur à partir de l'élément de bouchon (800).

3. Dispositif de génération de signal selon la revendication 1, dans lequel une partie interne de la partie centrale du traceur (900) est remplie d'encre, et dans lequel l'encre est déchargée depuis la pointe du traceur (910).

4. Dispositif de génération de signal selon la revendication 1, dans lequel une protubérance ou une structure destinée à former un espace est réalisée sur une surface circonférentielle externe de la partie de corps (920) ou une surface circonférentielle interne de l'élément de bouchon (800), de telle façon que la surface circonférentielle interne de l'élément de bouchon (800) et la surface circonférentielle externe de la partie de corps (920) sont empêchées d'être en contact étroit l'une avec l'autre.

5. Dispositif de génération de signal selon la revendication 1, dans lequel le logement (700) inclut une unité (760) de détection de la pression qui est placée dans une position adjacente à une partie supérieure de la partie de corps (920) et qui vient en contact étroit avec la partie supérieure de la partie de corps (920) si un utilisateur écrit tout en permettant à la pointe du traceur (910) d'être en contact avec une surface d'écriture, pour déterminer, en fonction de la pression appliquée par la pointe du traceur (910) si la pointe du traceur (910) est en contact ou pas avec la surface d'écriture et mesurer une pression d'écriture.

6. Dispositif de génération de signal selon la revendication 5, dans lequel l'unité de détection de la pression (760) est placée au niveau d'une extrémité distale de la partie de l'installation de l'émetteur ultrasonique (750).

7. Dispositif de génération de signal selon la revendication 5, dans lequel le logement (700) comprend en outre :

- une unité (700) de génération d'un signal de référence qui génère un signal de référence, et

un contrôleur (720) qui délivre des signaux de contrôle pour ordonner la génération du signal de référence et du signal ultrasonique à l'unité (710) de génération du signal de référence et à l'émetteur ultrasonique (750).

8. Dispositif de génération de signal selon la revendication 7, dans lequel le contrôleur (720) transmet l'information de pression provenant de l'unité de détection de la pression (760) en même temps que le signal de référence.

【Figure 1】

【Figure 2】

【Figure 3】

REFERENCE SIGNAL

540
510
500
520
530

440
450
400

612
614
610
600
630

410
ULTRASONIC SIGNAL
ULTRASONIC SIGNAL
432
430
460
420
ULTRASONIC SIGNAL
ULTRASONIC SIGNAL

【Figure 4】

REFERENCE SIGNAL

540
510
500
520
530

612 } 610
614 }    } 600
630 }

440
450
400
410
432
430
420
460

【Figure 5】

【Figure 6】

REFERENCE SIGNAL

540

510

520

500

530

610

616

480

400

440

450

410

ULTRASONIC
SIGNAL

ULTRASONIC
SIGNAL

432

420

430

460

ULTRASONIC SIGNAL

ULTRASONIC SIGNAL

630

【Figure 7】

REFERENCE
SIGNAL

730

720

710

700

740

ULTRASONIC
SIGNAL

ULTRASONIC
SIGNAL

750

760

810

800

820

900 { 920
910 }

ULTRASONIC
SIGNAL

760

920

921

910

ULTRASONIC
SIGNAL

【Figure 8】

【Figure 9】

REFERENCE SIGNAL